(19)

Europäisches Patentamt
European Patent Office
Office européen des brevets

(11) **EP 4 647 317 A1**

(12) **EUROPEAN PATENT APPLICATION**
published in accordance with Art. 153(4) EPC

(43) Date of publication:
**12.11.2025 Bulletin 2025/46**

(21) Application number: **24752668.4**

(22) Date of filing: **16.01.2024**

(51) International Patent Classification (IPC):
**B61H 11/00** (2006.01)

(52) Cooperative Patent Classification (CPC):
Y02T 10/72

(86) International application number:
**PCT/CN2024/072475**

(87) International publication number:
**WO 2024/164810 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023   CN 202310095786**

(71) Applicant: **Knorr-Bremse Systems for Rail
Vehicles (Suzhou)
Co., Ltd.
Suzhou, Jiangsu 215000 (CN)**

(72) Inventors:
• **SUN, Yangshan
  Suzhou, Jiangsu 215000 (CN)**
• **CHEN, Mengxia
  Suzhou, Jiangsu 215000 (CN)**

(74) Representative: **Prüfer & Partner mbB
Patentanwälte · Rechtsanwälte
Sohnckestraße 12
81479 München (DE)**

(54) **MARK-ALIGNING STOPPING CONTROL METHOD AND APPARATUS FOR RAIL VEHICLE,
AND COMPUTER STORAGE MEDIUM**

(57)      A method for control of mark-aligned stopping of a rail vehicle, the method comprising: judging whether a vehicle meets a state switching condition; if so, recording a linear velocity change amount ($\Delta V$) of a wheel pair of the vehicle within a sampling period ($\Delta T$), and calculating an actual deceleration value on the basis of the sampling period and the linear velocity change amount; determining a braking force compensation amount on the basis of the actual deceleration value and a theoretical deceleration value. The method increases the accuracy of mark-aligned stopping of a rail vehicle, achieving closed-loop control of a braking system.

[Fig.1]

judging whether a rail vehicle meets a state switching condition; — S1

yes

recording a linear velocity change amount ΔV of a wheel pair of the rail vehicle within a sampling period ΔT, and calculating an actual deceleration value a on the basis of the sampling period ΔT and the linear velocity change amount ΔV; — S2

determining a deceleration compensation amount Δa of the rail vehicle on the basis of the actual deceleration value a and a theoretical deceleration aTheo; and based on the deceleration compensation amount Δa, determining a braking force output and adjusting same according to a corresponding braking force compensation amount, to control mark-aligned stopping of the rail vehicle. — S3

EP 4 647 317 A1

## Description

### TECHNICAL FIELD

The present invention relates to the field of railways and rail transport, in particular to a method and apparatus for control of mark-aligned stopping of a rail vehicle, and a computer storage medium.

### BACKGROUND ART

In urban rail transport vehicles, all rail vehicle operation employs ATO (automatic train operation, an automatic driving system), and stopping at platforms is essentially always done by aligning platform screen doors with train doors; therefore, when a vehicle enters a station and stops, the requirements for the precision of vehicle stopping by the alignment of marks are quite strict, generally plus or minus 0.3 m relative to a target distance.

At present, braking types in rail transport vehicles are generally divided into emergency braking, fast braking and conventional braking. Urban rail vehicle trains generally employ conventional braking, which typically employs hybrid electric/air braking, based on the principle of prioritizing electric braking and using air braking for compensation to make up any deficiencies. When a vehicle is moving at low speed, the performance of electric braking by an electric machine is somewhat weakened, at which time the switch from electricity to air will take place, such that air braking replaces electric braking of the vehicle. When the switch from electricity to air is complete, air braking has already completed more than 90% of an expected compressed air action, at which time the deceleration required by the vehicle is calculated, mainly using a vehicle signal system, according to the distance from the vehicle to a target point position, and this is then sent by means of a train control system (TCMS) to the braking system to perform braking, ensuring that the position where the vehicle doors stop can be aligned with the corresponding position of the platform screen doors.

The method described above has the following shortcomings. Firstly, in order to calculate deceleration according to distance, it is necessary to estimate the current distance from the vehicle to the target based on work experience, and such an operation will inevitably increase error during operation. Secondly, the braking system performs braking directly after receiving a braking instruction, and is unable to adjust the corresponding braking force in real time according to the current vehicle deceleration, i.e. closed-loop control of the braking system is not achieved.

### SUMMARY OF THE INVENTION

An objective of the present invention is to provide a method for control of mark-aligned stopping of a rail vehicle, to solve the technical problems in the prior art of failure to achieve closed-loop control of the braking system and large error.

An objective of the present invention is to provide an apparatus for control of mark-aligned stopping of a rail vehicle.

An objective of the present invention is to provide a computer storage medium.

To achieve one of the abovementioned objectives of the invention, the present invention provides a method for control of mark-aligned stopping of a rail vehicle, comprising: judging whether a rail vehicle meets a state switching condition; if so, recording a linear velocity change amount $\Delta V$ of a wheel pair of the rail vehicle within a sampling period $\Delta T$, and calculating an actual deceleration value a on the basis of the sampling period $\Delta T$ and the linear velocity change amount $\Delta V$; determining a deceleration compensation amount $\Delta a$ of the rail vehicle on the basis of the actual deceleration value a and a theoretical deceleration value $a_{Theo}$; and based on the deceleration compensation amount $\Delta a$, determining a braking force output and adjusting same according to a corresponding braking force compensation amount, to control mark-aligned stopping of the rail vehicle.

As a further improvement to an embodiment of the present invention, the state switching condition comprises the rail vehicle not having experienced slipping, and/or the rail vehicle having switched from electricity to air.

As a further improvement to an embodiment of the present invention, the state switching condition comprises the rail vehicle not having experienced slipping, and said "judging whether a rail vehicle meets a state switching condition" specifically comprises: measuring an angular velocity of a first wheel pair and an angular velocity of a second wheel pair of the rail vehicle, and judging whether a difference between the angular velocity of the first wheel pair and the angular velocity of the second wheel pair is within a preset range; if so, determining that the rail vehicle has not experienced slipping.

As a further improvement to an embodiment of the present invention, the state switching condition comprises the rail vehicle having switched from electricity to air, and said "judging whether a rail vehicle meets a state switching condition" specifically comprises: measuring a travel speed of the rail vehicle within a preset length of time, and judging whether the current travel speed falls within a preset low-speed range; if so, determining that the rail vehicle has switched from electricity to air, and is in an air braking state.

As a further improvement to an embodiment of the present invention, said "recording a linear velocity change amount $\Delta V$ of a wheel pair of the rail vehicle within a sampling period $\Delta T$" specifically comprises: recording an angular velocity change amount $\Delta \omega$ of a wheel pair of the rail vehicle within a sampling period $\Delta T$, and calculating the linear velocity change amount $\Delta V$ on the basis of the angular velocity change amount $\Delta \omega$.

As a further improvement to an embodiment of the present invention, said "recording an angular velocity change amount $\Delta\omega$ of a wheel pair of the rail vehicle within a sampling period $\Delta T$" specifically comprises: recording an amount of change $\Delta n$ in the number of shaft revolutions of a wheel pair of the rail vehicle within a sampling period $\Delta T$, and calculating the angular velocity change amount $\Delta\omega$ on the basis of the amount of change $\Delta n$ in the number of shaft revolutions; said "determining a deceleration compensation amount $\Delta a$ of the rail vehicle on the basis of the actual deceleration value a and a theoretical deceleration value $a_{Theo}$" specifically comprises: the deceleration compensation amount $\Delta a$, the theoretical deceleration value $a_{Theo}$, the linear velocity change amount $\Delta V$, the sampling period $\Delta T$, the angular velocity change amount $\Delta\omega$ and the amount of change $\Delta n$ in the number of shaft revolutions at least satisfying:

$$\Delta a = a_{Theo} - a$$

$$a = \Delta V / \Delta T$$

$$\Delta V = \Delta\omega \times R$$

$$\Delta\omega = 2 \times \pi \times \Delta n$$

where R denotes the radius of a wheel in the wheel pair.

As a further improvement to an embodiment of the present invention, said "based on the deceleration compensation amount $\Delta a$, determining and applying a corresponding braking force, to control mark-aligned stopping of the rail vehicle" specifically comprises: judging whether the deceleration compensation amount $\Delta a$ is greater than or equal to a compensation reference value A; if so, controlling a braking system in the rail vehicle to increase an air braking force output by a braking force compensation amount corresponding to the deceleration change amount $\Delta a$; otherwise, controlling the braking system to reduce an air braking force output by a braking force compensation amount corresponding to the deceleration change amount $\Delta a$.

To achieve one of the abovementioned objectives of the invention, an embodiment of the present invention provides an apparatus for control of mark-aligned stopping of a rail vehicle, the control apparatus comprising a mark-aligned stopping control module, which comprises a memory and a processor, the memory having a computer program that can run on the processor, wherein the processor, upon executing the computer program, implements the steps of the abovementioned method for control of mark-aligned stopping of a rail vehicle.

As a further improvement to an embodiment of the present invention, the control apparatus further comprises a braking system, the braking system being controlled by the processor, and being used to output an air braking force to a first wheel pair and a second wheel pair.

As a further improvement to an embodiment of the present invention, the control apparatus further comprises: a first shaft number sensor in communicative connection with the processor, used for measuring a first number of shaft revolutions of a first wheel pair, and transmitting data on the first number of shaft revolutions to the processor; a second shaft number sensor in communicative connection with the processor, used for measuring a second number of shaft revolutions of a second wheel pair, and transmitting data on the second number of shaft revolutions to the processor.

To achieve one of the abovementioned objectives of the invention, the present invention further provides a computer storage medium, in which is stored a computer program which, when run, causes a device where the computer storage medium is located to perform the steps of the abovementioned method for control of mark-aligned stopping of a rail vehicle.

Compared with the prior art, embodiments of the present invention have at least one of the following beneficial effects:

Through the use of the method for control of mark-aligned stopping of a rail vehicle in the present invention, merely by calculating a linear velocity change amount of a wheel pair of the rail vehicle within a sampling period, a corresponding actual deceleration value is calculated; based on the size relationship between the actual deceleration value and a theoretical deceleration value given by the braking system, a deceleration compensation amount of the rail vehicle is determined; based on the deceleration compensation amount, a corresponding braking force compensation amount is determined; and on this basis, an output of air braking force is adjusted, to control mark-aligned stopping of the rail vehicle. The present control method and apparatus are simple and easy to implement, periodically measuring actual data of vehicle wheel pairs to calculate deceleration values, with high data accuracy and small error, and closed-loop control of the braking system is achieved.

BRIEF DESCRIPTION OF THE DRAWINGS

Fig. 1 is a schematic drawing of steps of a method for control of mark-aligned stopping of a rail vehicle in an embodiment of the present invention.
Fig. 2 is a schematic diagram of a process of switching between electric braking and air braking of a rail vehicle in an embodiment of the present invention.
Fig. 3 is a schematic diagram of an apparatus for control of mark-aligned stopping of a rail vehicle in an embodiment of the present invention.

DETAILED DESCRIPTION OF EMBODIMENTS

The present invention is described in detail below in conjunction with particular embodiments shown in the drawings. However, these embodiments do not limit the present invention, and changes to structure, method or function made on the basis of these embodiments by those skilled in the art are included in the scope of protection of the present invention.

It should be explained that the term "comprises" or any other variant thereof is intended to encompass non-exclusive inclusion, such that a process, method, article or device comprising a series of key elements does not only comprise these key elements, but also comprises other key elements that are not explicitly listed, or also comprises key elements intrinsic to such a process, method, article or device. In addition, terms such as "first" and "second" are merely used for descriptive purposes, and should not be construed as indicating or implying relative importance.

In the field of rail transport, said mark-aligned stopping means that when a train enters a station and stops, the doors of the train are exactly aligned with the screen doors of the platform, so that the vehicle can stop at the corresponding point smoothly and safely. This not only makes it easy for passengers to embark and disembark, but also facilitates safety protection at the vehicle stopping point, ensuring safe travel for the passengers. Thus, mark-aligned stopping is of relatively major practical significance in the field of rail vehicles.

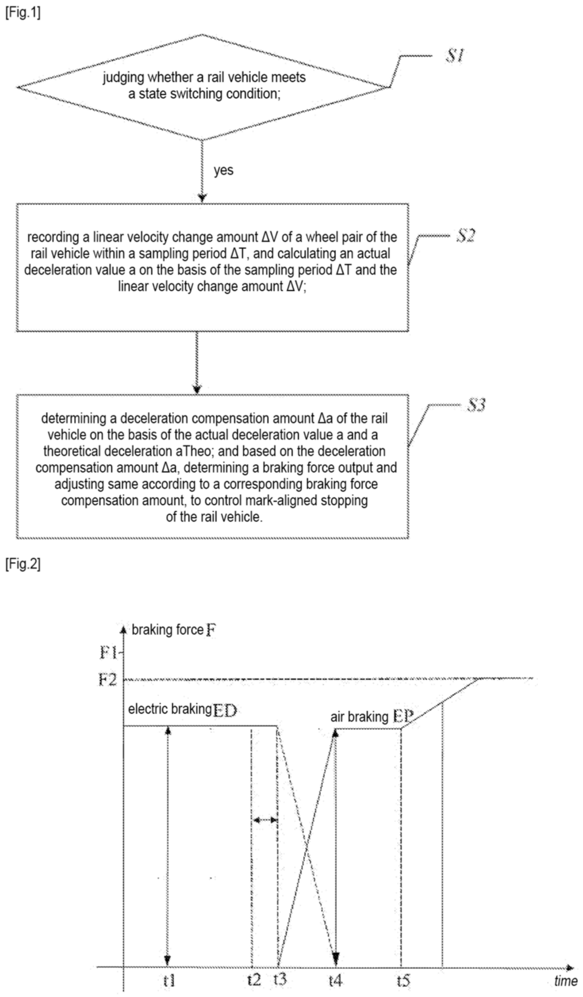

On this basis, the present invention provides a method for control of mark-aligned stopping of a rail vehicle, specifically comprising the following steps, as shown in Fig. 1:

Step S1, judging whether a rail vehicle meets a state switching condition.

If so, the method jumps to step S2, recording a linear velocity change amount $\Delta V$ of a wheel pair of the rail vehicle within a sampling period $\Delta T$, and calculating an actual deceleration value a on the basis of the sampling period $\Delta T$ and the linear velocity change amount $\Delta V$.

Step S3, determining a deceleration compensation amount $\Delta a$ of the rail vehicle on the basis of the actual deceleration value a and a theoretical deceleration value $a_{Theo}$; and based on the deceleration compensation amount $\Delta a$, determining a braking force output and adjusting same according to a corresponding braking force compensation amount, to control mark-aligned stopping of the rail vehicle. In this way, since actual running data of the wheel pair is recorded to calculate the actual deceleration value of the rail vehicle, data accuracy is high, and error arising from experience-based calculation is avoided; furthermore, as the braking force output is adjusted dynamically according to periodically measured actual running data of the vehicle, closed-loop control of the braking system is achieved.

As shown in Fig. 2, a normal running process of a rail vehicle generally includes at least one of emergency braking, fast braking and conventional braking. In the case of an urban rail vehicle train, conventional braking in the form of hybrid electric/air braking is a more suitable braking method, in which case the braking force of the rail vehicle is principally from electric braking, which is supplemented with air braking. When the vehicle speed drops to a certain range, in the process of preparing for mark alignment, for example when running at a speed of 5 km/h - 8 km/h, in a preferred embodiment, the switch from hybrid electric/air braking to air braking will take place, and such a process may be defined as a type of state switching. To achieve adaptive control of this state switching, the present invention realizes fast response and dynamic adjustment by setting judgement conditions for the state switching process.

In step S1, the state switching condition may further comprise the rail vehicle not having experienced slipping, the rail vehicle having switched from electricity to air, or simultaneously comprise the rail vehicle not having experienced slipping and having switched from electricity to air.

In one aspect, with regard to the condition that the rail vehicle has not experienced slipping, in a first embodiment, step S1 may be achieved by measuring a difference in angular velocity of wheel pairs, and specifically may comprise:

Step S111, measuring an angular velocity of a first wheel pair and an angular velocity of a second wheel pair of the rail vehicle, and judging whether a difference between the angular velocity of the first wheel pair and the angular velocity of the second wheel pair is within a preset range;

if so, then the method jumps to step S112, determining that the rail vehicle has not experienced slipping. In this way, the difference in angular velocity of wheel pairs of the rail vehicle is measured to judge whether the vehicle is slipping; the process is simple and easy to implement, and is based on actual data measurement, so has high data accuracy.

In a second embodiment, deceleration of wheel pairs can be measured to perform judgement. Specifically, step S1 may comprise: measuring a deceleration value of a first wheel pair and a deceleration value of a second wheel pair of the rail vehicle, and judging whether the deceleration value of the first wheel pair and the deceleration value of the second wheel pair have both not exceeded a preset value; if so, the braking system determines that the rail vehicle has not experienced slipping.

In another aspect, with regard to the condition that the rail vehicle has already switched from electricity to air, step S1 may be achieved by measuring a current travel speed, and specifically may comprise:

Step S121, measuring a travel speed of the rail vehicle within a preset length of time, and judging whether the current travel speed falls within a preset low-speed range;
if so, then the method jumps to step S122, determining that the rail vehicle has switched from electricity to air, and is in an air braking state. The preset low-speed range is preferably lower than 5 km/h.

In this way, as the vehicle is determined as having switched from electricity to air by measuring the travel speed of the rail vehicle, the time taken for signal transmission between the train monitoring and management system (TCMS) and the braking system is avoided, and inter-dependency of equipment is reduced.

In actual applications, when it is judged that the current state of the rail vehicle already meets the state switching condition, the train monitoring and management system (TCMS) issues an electric braking exit signal and transmits same to the traction system and the braking system, and controls air braking to begin taking over the braking activity of the urban rail vehicle. Thus, the electric braking system or hybrid electric/air braking system will reduce the output of braking force, and the air braking system will increase the output of braking force, and finally maintain it at a preset braking force output target value.

Specifically, referring to Fig. 2, within the period of time from t1 to t3, braking operation by the electric braking ED system is activated, and the speed of the vehicle falls to within a certain range (i.e. the low-speed range). When the switch from electricity to air, i.e. state switching takes place, within the period of time from t3 to t4, the performance of the electric braking ED system gradually weakens, and the air braking EP system begins to activate, gradually taking over the work of the electric braking ED system, until the vehicle braking force reaches a target value. At time t4, the braking system completes the switch from electric braking to air braking; after time t4, the air braking system is in full control.

In the process of takeover by air braking, or in the process of the rail vehicle undergoing another type of state switching, it is necessary to dynamically adjust the output of braking force as the braking process develops, to achieve smooth vehicle braking and final mark alignment.

To reduce error in braking output, the present invention provides a refinement of step S2, so as to utilize an arithmetic operation relationship to replace actual measurement by sensors, and weaken equipment dependency.

Specifically, in an embodiment, the "recording a linear velocity change amount $\Delta V$ of a wheel pair of the rail vehicle within a sampling period $\Delta T$" part of step S2 may specifically comprise:

step S21, recording an angular velocity change amount $\Delta\omega$ of a wheel pair of the rail vehicle within a sampling period $\Delta T$;
step S22, calculating the linear velocity change amount $\Delta V$ on the basis of the angular velocity change amount $\Delta\omega$.

In this way, the angular velocity change amount of a wheel pair of the rail vehicle is actually acquired to calculate the linear velocity change amount; this is simple and easy to implement, with high data reliability, and low error in the calculation result.

When the urban rail vehicle comprises two wheel pairs, this embodiment is specifically as follows: within a sampling period $\Delta T$, an angular velocity change amount $\Delta\omega1$ of a first wheel pair and an angular velocity change amount $\Delta\omega2$ of a second wheel pair of the rail vehicle are separately recorded. Based on the angular velocity change amount $\Delta\omega1$ of the first wheel pair and the angular velocity change amount $\Delta\omega2$ of the second wheel pair, a linear velocity change amount $\Delta V1$ of the first wheel pair and a linear velocity change amount $\Delta V2$ of the second wheel pair are calculated. On this basis, actual deceleration values respectively corresponding to the two wheel pairs can be calculated, increasing the precision of the braking force compensation amount that is finally generated.

In theory, when the first wheel pair and second wheel pair of the rail vehicle have not experienced slipping, $\Delta\omega1$ and $\Delta\omega2$ are identical, i.e. $\Delta V1$ and $\Delta V2$ are also identical. Preferably, the angular velocity change amounts of the wheel pairs of the rail vehicle may both be recorded as $\Delta\omega$, and the linear velocity change amounts of the wheel pairs may both be recorded as $\Delta V$. In this way, based on the linear velocity change amount $\Delta V$ of the wheel pairs of the rail vehicle and the data sampling period $\Delta T$, the actual deceleration value a of the rail vehicle at the present time can be calculated.

Optionally, the mean values of the angular velocity change amounts and linear velocity change amounts of the first wheel pair and the second wheel pair within the sampling period $\Delta T$ can be used as the abovementioned angular velocity change amount and linear velocity change amount of the rail vehicle.

Of course, in addition to being used to calculate the actual deceleration value a, the angular velocity change amount and corresponding linear velocity change amount of the first wheel pair and the second wheel pair of the rail vehicle which are respectively measured and calculated also enable more effective detection of whether the rail vehicle has experienced slipping at the present time, i.e. steps S21 - S22 mentioned above may also be used as a replacement in step S1.

In a preferred embodiment, said "recording a linear velocity change amount $\Delta V$ of a wheel pair of the rail vehicle within a sampling period $\Delta T$" in step S2 may specifically comprise:

recording an amount of change $\Delta n$ in the number of shaft revolutions of a wheel pair of the rail vehicle within a sampling period $\Delta T$, and calculating the angular velocity change amount $\Delta\omega$ on the basis of the amount of change $\Delta n$ in the number of shaft revolutions.

Furthermore, based on the relationship between the angular velocity change amount $\Delta\omega$ and the linear velocity change amount $\Delta V$ of the wheel pair of the rail vehicle:

$$\Delta V = \Delta \omega \times R$$

the linear velocity change amount $\Delta V$ of the wheel pair of the rail vehicle can be obtained from the angular velocity change amount $\Delta \omega$ of the wheel pair by conversion.

Further, the amount of change $\Delta n$ in the number of shaft revolutions of the wheel pair of the rail vehicle within the sampling period $\Delta T$ is recorded, and the angular velocity change amount $\Delta \omega$ is calculated on the basis of the amount of change $\Delta n$ in the number of shaft revolutions, wherein the relationship between the angular velocity and the amount of change $\Delta n$ in the number of shaft revolutions of the wheel pair is as follows:

$$\Delta \omega = 2 \times \pi \times \Delta n$$

where R denotes the radius of a wheel in the wheel pair.

In this way, the process of acquiring the linear velocity can ultimately be converted to a process of measuring the number of revolutions per unit time, considerably reducing structural complexity and dependence on sensor precision, increasing the accuracy of calculation of the final actual deceleration value, and assisting subsequent adjustment of braking force output.

Preferably, said "calculating an actual deceleration value $a$ on the basis of the sampling period $\Delta T$ and the linear velocity change amount $\Delta V$" in step S2 may specifically comprise:

calculating an actual deceleration value a on the basis of the quotient of the linear velocity change amount $\Delta V$ and the sampling period $\Delta T$, i.e.

$$a = \Delta V / \Delta T$$

In step S3, the theoretical deceleration value $a_{Theo}$ represents a braking deceleration requirement for the braking system. In one aspect, the theoretical deceleration value $a_{Theo}$ may come from the train monitoring and control system (TCMS), which can control the braking process and in particular distribute braking force in a controlled or automated manner.

In another aspect, the theoretical deceleration value $a_{Theo}$ may be received in the form of a numerical value or in the form of braking level information. In the latter case, the braking level comprises multiple types, and each level type may have a corresponding braking force and deceleration value. In this way, the theoretical deceleration value $a_{Theo}$ can be obtained by analysing the braking level information or deceleration numerical value information.

In an embodiment, the deceleration compensation amount $\Delta a$ may be determined by the difference between the theoretical deceleration value $a_{Theo}$ and the actual deceleration value a. In this way, the decelera-

tion compensation amount $\Delta a$ can reflect the disparity between the actual deceleration value a and the theoretical deceleration value $a_{Theo}$ which represents a target deceleration, in order to correspondingly generate a braking force compensation amount to adjust the braking force output. Specifically, the theoretical deceleration value $a_{Theo}$, the actual deceleration value a and the deceleration compensation amount $\Delta a$ of the rail vehicle may at least satisfy:

$$\Delta a = a_{Theo} - a.$$

Prior to step S3, regardless of whether the braking system is in a hybrid electric/air braking output state or an air braking output state, it has an initial braking force output, and the braking force compensation amount corresponding to the deceleration compensation amount $\Delta a$ can be added to the initial braking force output to generate a braking force output such as F0 + $\Delta F$, or subtracted from the initial braking force to generate a braking force output such as F0 - $\Delta F$.

To adapt to different braking stages, and achieve automatic switching between the abovementioned two methods of calculating braking force output, in an embodiment, "based on the deceleration compensation amount $\Delta a$, determining and applying a corresponding braking force, to control mark-aligned stopping of the rail vehicle" in step S3 may specifically comprise:

step S31, judging whether the deceleration compensation amount $\Delta a$ is greater than or equal to a compensation reference value A;
if so, the method jumps to step S32, controlling the braking system in the rail vehicle to increase an air braking force output by the braking force compensation amount corresponding to the deceleration change amount $\Delta a$;
otherwise, the method jumps to step S33, controlling the braking system to reduce an air braking force output by the braking force compensation amount corresponding to the deceleration change amount $\Delta a$. In this way, the air braking force output result can be dynamically adjusted according to the sizes of the current deceleration compensation amount of the rail vehicle and the compensation reference value, giving a good braking effect with a high level of flexibility. The compensation reference value A is adapted to the deceleration performance and mass of the rail vehicle itself, and may be preset by the user; alternatively, it may be adaptively configured dynamically on the basis of such a correspondence.

It should be emphasized that the deceleration compensation amount $\Delta a$ obtained by calculation after performing steps S1 to S3 is realized on the basis of real-time data of the rail vehicle actually measured within the time period of the sampling period $\Delta T$. If there is no braking force compensation amount corresponding to the deceleration compensation amount $\Delta a$ that is calculated and fed back in steps S1 to S3, or a train monitoring and control signal (TCMS) does not feed back a corresponding braking force compensation amount to the braking system side because the deceleration compensation amount $\Delta a$ fails to meet a certain condition, then the next sampling period is entered after step S3, and steps S1 to S3 mentioned above are repeated, until the rail vehicle completes stopping and its speed drops to 0.

The method provided in the present invention for control of mark-aligned stopping of a rail vehicle has now been fully expounded. Once the rail vehicle has met a switching condition, a linear velocity change amount of a wheel pair of the rail vehicle is periodically measured to calculate a currently corresponding actual deceleration value of the rail vehicle, which is then compared with a theoretical deceleration value; based on the comparison result, a deceleration compensation amount of the rail vehicle is determined, and based on the deceleration compensation amount, a corresponding braking force compensation amount is further determined, and an output of braking force is adjusted according to the braking force compensation amount, to control mark-aligned stopping of the rail vehicle. In this way, as actual running data of the wheel pair of the rail vehicle is recorded to calculate an actual deceleration value, data accuracy is high, and error arising in experience-based calculation of target distance is avoided. Furthermore, closed-loop control of the braking system is achieved through periodic measurement of data and adjustment of braking force dynamically in real time.

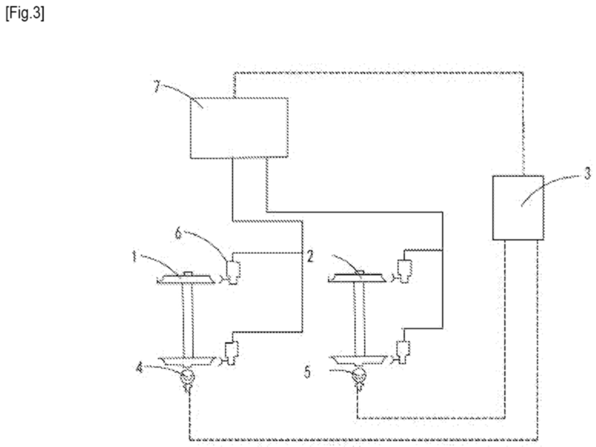

As shown in Fig. 3, the present invention also provides an apparatus for control of mark-aligned stopping of a rail vehicle, which is able to realize the method for control of mark-aligned stopping of a rail vehicle by measurement by a method of actual measurement.

The control apparatus design is based on a rail vehicle; specifically, in this embodiment, the rail vehicle used for testing is a single-carriage train, for simulating an actual running situation. In other embodiments, the rail vehicle may also be designed as another multi-carriage train, as required.

The control apparatus comprises a mark-alignment control module 3, which comprises a memory and a processor, wherein the memory stores a computer program that can run on the processor, and the processor, upon executing the program, implements the steps of the method for control of mark-aligned stopping of a rail vehicle as described in any one of the technical solutions above.

The control apparatus further comprises a braking system, which is not limited to an air braking system and may also be a hybrid electric/air braking system, as long as it can realize air braking; the present invention imposes no specific restrictions in this respect.

The braking system is controlled by the processor, and used to output an air braking force to a first wheel pair 1 and a second wheel pair 2 of the rail vehicle. Preferably, the braking system may employ a conventional method of braking from the prior art, i.e. hybrid electric/air braking, based on the principle of prioritizing electric braking and using air braking for compensation to make up any deficiencies.

The braking system further comprises a first shaft number sensor 4 in communicative connection with the processor, used for measuring a first number of shaft revolutions of the first wheel pair 1 within a sampling period, and transmitting data on the first number of shaft revolutions to the processor; and a second shaft number sensor 5 in communicative connection with the processor, used for measuring a second number of shaft revolutions of the second wheel pair 2 within the sampling period, and transmitting data on the second number of shaft revolutions to the processor.

Specifically, in this embodiment, taking conventional braking as an example, basic braking elements 6 are provided at the first wheel pair 1 and the first wheel pair 2; a braking control unit 7 outputs a braking force to the first wheel pair 1 and the second wheel pair 2 of the rail vehicle by controlling the basic braking elements 6; the first shaft number sensor 4 and the second shaft number sensor 5 are provided at shaft ends of the first wheel pair 1 and the second wheel pair 3 respectively, and used for measuring the number of shaft revolutions of the first wheel pair 1 and the second wheel pair 2 within the sampling period, and it is thus possible to accurately measure the angular velocity of wheel rotation.

The method of operation of the control apparatus in a complete mark-alignment control procedure is explained in detail below:

When the mark-alignment control module 3 detects that the travel speed of the rail vehicle within a preset length of time has fallen within a preset low-speed range at the present time, and it is detected that the first wheel pair 1 and the second wheel pair 2 have not experienced slipping, the first shaft number sensor 4 and the second shaft number sensor 5 are manually controlled or automatically controlled by the mark-alignment control module 3 to measure and record the number of shaft revolutions of the first wheel pair 1 and the number of shaft revolutions of the second wheel pair 2 respectively within a sampling period $\Delta T$, and transmit the data on the number of shaft revolutions to the mark-alignment control module 3, for detection, analysis and calculation by the processor.

On the basis of the sampling period $\Delta T$ and the amount of change $\Delta n$ in the number of shaft revolutions, and based on the definition of angular velocity and the relationship between angular velocity and linear velocity, the actual deceleration value of the rail vehicle within the sampling period at the present time is calculated. Next, with reference to a size relationship with a theoretical deceleration value, a braking force compensation amount corresponding to a deceleration compensation amount outputted by the air braking system is determined, and used to adjust an output of braking force.

The present invention further provides a computer storage medium, having stored therein a computer program which, when run, causes a device where the computer storage medium is located to implement the steps of the method for control of mark-aligned stopping of a rail vehicle as described in any one of the technical solutions above.

In summary, in the present invention, an amount of change in the number of shaft revolutions of a first wheel pair and a second wheel pair of the rail vehicle within a sampling period is measured, to calculate a linear velocity change amount of the first wheel pair and the second wheel pair, and further calculate an actual deceleration value; then with reference to a theoretical deceleration value, a braking force compensation amount corresponding to the difference in deceleration is determined; at the same time, based on a result of comparing a deceleration compensation amount with a compensation reference value, a braking system in the rail vehicle is further controlled to increase an air braking force output or reduce an air braking force output. The present control method and apparatus are simple and easy to implement, and calculation in the mark-alignment control method is accomplished by measuring actual data, so data accuracy is high, with low error. In addition, data on the number of shaft revolutions is measured periodically, to adjust the braking force dynamically in real time until the vehicle stops in alignment with marks, thus achieving closed-loop control of the braking system.

It should be understood that although the description herein is presented with reference to embodiments, it is by no means the case that each embodiment comprises only one independent technical solution. This form of presentation is adopted herein purely for clarity. Those skilled in the art should consider the description in its entirety. The technical solutions in different embodiments may also be suitably combined to form other embodiments understandable to those skilled in the art.

The series of detailed descriptions set out above are merely specific descriptions of feasible embodiments of the present invention, and are not intended to limit the scope of protection thereof. All equivalent embodiments or changes made without departing from the artistic spirit of the present invention should be included in the scope of protection thereof.

**Claims**

1. A method for control of mark-aligned stopping of a rail vehicle, **characterized by** comprising:

   judging whether a rail vehicle meets a state switching condition;
   if so, recording a linear velocity change amount $\Delta V$ of a wheel pair of the rail vehicle within a sampling period $\Delta T$, and calculating an actual deceleration value a on the basis of the sampling period $\Delta T$ and the linear velocity change amount $\Delta V$;
   determining a deceleration compensation amount $\Delta a$ of the rail vehicle on the basis of the actual deceleration value a and a theoretical deceleration value $a_{Theo}$; and based on the deceleration compensation amount $\Delta a$, determining a braking force output and adjusting same according to a corresponding braking force compensation amount, to control mark-aligned stopping of the rail vehicle.

2. The method for control of mark-aligned stopping of a rail vehicle as claimed in claim 1, **characterized in that** the state switching condition comprises the rail vehicle not having experienced slipping, and/or the rail vehicle having switched from electricity to air.

3. The method for control of mark-aligned stopping of a rail vehicle as claimed in claim 2, **characterized in that** the state switching condition comprises the rail vehicle not having experienced slipping, and said "judging whether a rail vehicle meets a state switching condition" specifically comprises:

   measuring an angular velocity of a first wheel pair and an angular velocity of a second wheel pair of the rail vehicle, and judging whether a difference between the angular velocity of the first wheel pair and the angular velocity of the second wheel pair is within a preset range;
   if so, determining that the rail vehicle has not experienced slipping.

4. The method for control of mark-aligned stopping of a rail vehicle as claimed in claim 2, **characterized in that** the state switching condition comprises the rail vehicle having switched from electricity to air, and said "judging whether a rail vehicle meets a state switching condition" specifically comprises:

   measuring a travel speed of the rail vehicle within a preset length of time, and judging whether the current travel speed falls within a preset low-speed range;
   if so, determining that the rail vehicle has switched from electricity to air, and is in an air braking state.

5. The method for control of mark-aligned stopping of a rail vehicle as claimed in claim 1, **characterized in that** said "recording a linear velocity change amount $\Delta V$ of a wheel pair of the rail vehicle within a sampling period $\Delta T$" specifically comprises:
   recording an angular velocity change amount $\Delta\omega$ of a wheel pair of the rail vehicle within a sampling period $\Delta T$, and calculating the linear velocity change amount $\Delta V$ on the basis of the angular velocity

change amount $\Delta\omega$.

6. The method for control of mark-aligned stopping of a rail vehicle as claimed in claim 5, **characterized in that** said "recording an angular velocity change amount $\Delta\omega$ of a wheel pair of the rail vehicle within a sampling period $\Delta T$" specifically comprises:

recording an amount of change $\Delta n$ in the number of shaft revolutions of a wheel pair of the rail vehicle within a sampling period $\Delta T$, and calculating the angular velocity change amount $\Delta\omega$ on the basis of the amount of change $\Delta n$ in the number of shaft revolutions;

said "determining a deceleration compensation amount $\Delta a$ of the rail vehicle on the basis of the actual deceleration value $a$ and a theoretical deceleration value $a_{Theo}$" specifically comprises:

the deceleration compensation amount $\Delta a$, the theoretical deceleration value $a_{Theo}$, the linear velocity change amount $\Delta V$, the sampling period $\Delta T$, the angular velocity change amount $\Delta\omega$ and the amount of change $\Delta n$ in the number of shaft revolutions at least satisfying:

$$\Delta a = a_{Theo} - a$$

$$a = \Delta V / \Delta T$$

$$\Delta V = \Delta\omega \times R$$

$$\Delta\omega = 2 \times \pi \times \Delta n$$

where R denotes the radius of a wheel in the wheel pair.

7. The method for control of mark-aligned stopping of a rail vehicle as claimed in claim 1, **characterized in that** said "based on the deceleration compensation amount $\Delta a$, determining and applying a corresponding braking force, to control mark-aligned stopping of the rail vehicle" specifically comprises:

judging whether the deceleration compensation amount $\Delta a$ is greater than or equal to a compensation reference value A;

if so, controlling a braking system in the rail vehicle to increase an air braking force output by a braking force compensation amount corresponding to the deceleration change amount $\Delta a$;

otherwise, controlling the braking system to reduce an air braking force output by a braking force compensation amount corresponding to the deceleration change amount $\Delta a$.

8. An apparatus for control of mark-aligned stopping of a rail vehicle, **characterized in that** the control apparatus comprises a mark-aligned stopping control module, which comprises a memory and a processor, the memory having a computer program that can run on the processor, wherein the processor, upon executing the computer program, implements the steps of the method for control of mark-aligned stopping of a rail vehicle as claimed in any one of claims 1 - 7.

9. The apparatus for control of mark-aligned stopping of a rail vehicle as claimed in claim 8, **characterized in that** the control apparatus further comprises a braking system, the braking system being controlled by the processor, and being used to output an air braking force to a first wheel pair and a second wheel pair.

10. The apparatus for control of mark-aligned stopping of a rail vehicle as claimed in claim 8, **characterized in that** the control apparatus further comprises:

a first shaft number sensor in communicative connection with the processor, used for measuring a first number of shaft revolutions of a first wheel pair, and transmitting data on the first number of shaft revolutions to the processor;

a second shaft number sensor in communicative connection with the processor, used for measuring a second number of shaft revolutions of a second wheel pair, and transmitting data on the second number of shaft revolutions to the processor.

11. A computer storage medium, in which is stored a computer program which, when run, causes a device where the computer storage medium is located to perform the steps of the method for control of mark-aligned stopping of a rail vehicle as claimed in any one of claims 1 - 7.

[Fig.1]

judging whether a rail vehicle meets a state switching condition; — S1

yes

recording a linear velocity change amount ΔV of a wheel pair of the rail vehicle within a sampling period ΔT, and calculating an actual deceleration value a on the basis of the sampling period ΔT and the linear velocity change amount ΔV; — S2

determining a deceleration compensation amount Δa of the rail vehicle on the basis of the actual deceleration value a and a theoretical deceleration aTheo; and based on the deceleration compensation amount Δa, determining a braking force output and adjusting same according to a corresponding braking force compensation amount, to control mark-aligned stopping of the rail vehicle. — S3

[Fig.2]

[Fig.3]

**INTERNATIONAL SEARCH REPORT**

| International application No. |
| --- |
| **PCT/CN2024/072475** |

| A. | CLASSIFICATION OF SUBJECT MATTER |
| --- | --- |

B61H11/00(2006.01)i

According to International Patent Classification (IPC) or to both national classification and IPC

| B. | FIELDS SEARCHED |
| --- | --- |

Minimum documentation searched (classification system followed by classification symbols)

IPC: B61H11/, B60T13/74, B60T8/

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, WPABS, WPABSC, CNKI: 对标, benchmarking, linear, railway, velocity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116215600 A (KNORR-BREMSE EQUIPMENT (SUZHOU) CO., LTD.) 06 June 2023 (2023-06-06) <br> claims 1-11 | 1-11 |
| Y | CN 111824093 A (CRRC ZHUZHOU LOCOMOTIVE CO., LTD.) 27 October 2020 (2020-10-27) <br> description, paragraphs 3, 4, and 45-58 | 1-11 |
| Y | CN 108859781 A (CRRC NANJING PUZHEN HAITAI BRAKE EQUIPMENT CO., LTD.) 23 November 2018 (2018-11-23) <br> description, paragraphs 55-65, and figures 1-2 | 1-11 |
| Y | CN 112477830 A (CRRC TANGSHAN CO., LTD.) 12 March 2021 (2021-03-12) <br> description, paragraphs 52-119, and figures 1-5 | 1-11 |
| A | CN 110395276 A (BEIJING NATIONAL RAILWAY RESEARCH & DESIGN INSTITUTE OF SIGNAL & COMMUNICATION LTD.) 01 November 2019 (2019-11-01) <br> entire document | 1-11 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 February 2024** | **05 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 647 317 A1

**INTERNATIONAL SEARCH REPORT**

| International application No. |
| --- |
| **PCT/CN2024/072475** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112590854 A (CRRC ZHUZHOU LOCOMOTIVE CO., LTD.) 02 April 2021 (2021-04-02)<br>entire document | 1-11 |
| A | CN 113085807 A (CRRC TANGSHAN CO., LTD.) 09 July 2021 (2021-07-09)<br>entire document | 1-11 |
| A | GB 1187517 A (OERLIKEN MASCHF) 08 April 1970 (1970-04-08)<br>entire document | 1-11 |
| A | JP 2011205738 A (HITACHI, LTD.) 13 October 2011 (2011-10-13)<br>entire document | 1-11 |
| A | WO 2022148079 A1 (CRRC ZHUZHOU LOCOMOTIVE CO., LTD.) 14 July 2022 (2022-07-14)<br>entire document | 1-11 |

| INTERNATIONAL SEARCH REPORT Information on patent family members | | | | International application No. PCT/CN2024/072475 | | |
|---|---|---|---|---|---|---|

| Patent document cited in search report | | | Publication date (day/month/year) | Patent family member(s) | | Publication date (day/month/year) |
|---|---|---|---|---|---|---|
| CN | 116215600 | A | 06 June 2023 | None | | |
| CN | 111824093 | A | 27 October 2020 | None | | |
| CN | 108859781 | A | 23 November 2018 | None | | |
| CN | 112477830 | A | 12 March 2021 | None | | |
| CN | 110395276 | A | 01 November 2019 | WO | 2020258513 A1 | 30 December 2020 |
| | | | | BR | 112019021592 A2 | 04 January 2022 |
| CN | 112590854 | A | 02 April 2021 | None | | |
| CN | 113085807 | A | 09 July 2021 | None | | |
| GB | 1187517 | A | 08 April 1970 | CH | 474393 A | 30 June 1969 |
| | | | | US | 3537758 A | 03 November 1970 |
| | | | | DE | 1755486 A1 | 12 August 1971 |
| | | | | DE | 1755486 B2 | 03 July 1975 |
| | | | | YU | 31366 B | 30 April 1973 |
| | | | | AT | 285671 B | 10 November 1970 |
| | | | | FR | 1579549 A | 29 August 1969 |
| | | | | ES | 354565 A1 | 01 November 1969 |
| | | | | BE | 716043 A | 16 October 1968 |
| | | | | JPS | 4911895 B1 | 20 March 1974 |
| | | | | SE | 337388 B | 09 August 1971 |
| JP | 2011205738 | A | 13 October 2011 | None | | |
| WO | 2022148079 | A1 | 14 July 2022 | None | | |

Form PCT/ISA/210 (patent family annex) (July 2022)